# FASCICULE DE BREVET EUROPEEN

(11) **EP 2 352 673 B1**
(45) Date de publication et mention de la délivrance du brevet: **16.01.2013**
(21) Numéro de dépôt: 09797117.0
(22) Date de dépôt: 30.11.2009
(51) Int. Cl.: B64D 27/14, B64D 27/26

(54) **STRUCTURE RIGIDE DE MAT D'AERONEF PLAQUEE CONTRE UNE EXTENSION LATERALE DE FUSELAGE POUR SA FIXATION**
GEGEN EINE SEITENVERLÄNGERUNG DES FLUGZEUGRUMPFES ZUR FIXIERUNG GEPRESSTE STARRE MASTSTRUKTUR
RIGID AIRCRAFT PYLON STRUCTURE PRESSED AGAINST A SIDE EXTENSION OF THE FUSELAGE FOR THE ATTACHMENT THEREOF

(30) Priorité: 01.12.2008 FR 0858168
(43) Date de publication de la demande: 10.08.2011
(73) Titulaire: Airbus Operations, 31060 Toulouse (FR)
(72) Inventeur: MARCHE, Jacques Hervé, F-31200 Toulouse (FR)
(74) Mandataire: Ilgart, Jean-Christophe
(86) Numéro de dépôt international: PCT/FR2009/052332
(87) Numéro de publication internationale: WO 2010/063926

(56) Documents cités:
- EP-A- 0 311 155
- US-A- 4 854 525

## Description

La présente invention se rapporte de façon générale à une partie arrière d'aéronef comprenant au moins un ensemble moteur, en particulier du type destiné à être implanté latéralement par rapport au fuselage de cet aéronef. Le document US4854525, qui décrit toutes les caractéristiques du préambule de la revendication 1, est considéré l'état de la technique le plus proche.

Dans ce domaine, il existe un besoin de simplification de la fixation entre l'ensemble moteur et la structure de l'aéronef servant de support à cet ensemble moteur.

Pour répondre à ce besoin, l'invention a tout d'abord pour objet une partie arrière d'aéronef comprenant au moins un ensemble moteur intégrant un turbomoteur ainsi qu'un mât d'accrochage du turbomoteur, ledit ensemble moteur étant rapporté latéralement sur la structure de l'aéronef, ledit mât comprenant une structure rigide déportée radialement vis-à-vis d'un axe longitudinal du turbomoteur selon une direction d'écartement, le mât comportant également des premiers moyens de fixation assurant l'assemblage du turbomoteur sur la structure rigide ainsi que des seconds moyens de fixation fixés d'une part sur ladite structure rigide et d'autre part sur la structure de l'aéronef. Selon l'invention, la structure rigide comprend un caisson central longitudinal ainsi qu'un caisson de raccord porté par ledit caisson central longitudinal et faisant saillie de celui-ci dans un premier sens de la direction d'écartement allant du turbomoteur vers la structure rigide. De plus, ladite structure de l'aéronef comprend une extension latérale du fuselage faisant saillie de celui-ci dans un second sens de la direction d'écartement, opposé audit premier sens. Enfin, l'une des deux entités parmi ladite extension latérale de fuselage et ledit caisson de raccord est plaquée contre l'autre entité, en dessous de celle-ci, lesdits seconds moyens de fixation étant agencés entre ces deux entités.

Il résulte de cette conception originale une simplification notable de la fixation entre l'ensemble moteur et la structure de l'aéronef servant de support à cet ensemble moteur. En effet, l'ensemble moteur peut être facilement déplacé de sorte que son caisson de raccord vienne se plaquer contre l'extension latérale de fuselage, de préférence par simple hissage de cet ensemble moteur, les seconds moyens de fixation pouvant ensuite être aisément agencés entre ces deux entités pour permettre leur solidarisation.

A cet égard, si les deux cas sont envisagés, il est tout de même préféré celui dans lequel le caisson de raccord se trouve plaqué en dessous de l'extension latérale de fuselage, ce qui simplifie grandement le hissage de l'ensemble moteur. Effectivement, il suffit alors de déplacer l'ensemble moteur uniquement verticalement, sans rencontrer de gène particulière, jusqu'à obtenir le plaquage désiré contre la partie inférieure de l'extension latérale de fuselage. Cela peut par exemple s'effectuer à l'aide d'un outillage de hissage qui serait monté directement sur l'extension de fuselage.

De préférence, ladite extension latérale de fuselage comprend une pluralité de premières nervures, ledit caisson de raccord comprend une pluralité de secondes nervures, et au moins l'une desdites premières nervures est agencée dans la continuité de l'une desdites secondes nervures, sensiblement dans un même plan. Cela permet non seulement de faciliter le transfert d'efforts de l'ensemble moteur vers la structure de l'aéronef, mais offre également une facilité de montage des seconds moyens de fixation, qui peuvent aisément venir se monter sur ces nervures. De préférence, toutes les premières et secondes nervures sont situées dans la continuité les unes des autres, deux à deux, préférentiellement dans des plans parallèles. Ainsi, on prévoit effectivement de manière préférentielle qu'au moins une partie des seconds moyens de fixation est fixée sur lesdites premières et secondes nervures.

Selon un premier mode de réalisation préféré de la présente invention, lesdits seconds moyens de fixation forment un système de fixation isostatique de l'ensemble moteur sur la structure de l'aéronef. Dans un tel cas, lesdits seconds moyens de fixation sont préférentiellement constitués par une pluralité d'attaches intégrant chacune une bielle de reprise d'efforts. Chaque bielle est alors agencée dans la direction selon laquelle l'attache concernée doit reprendre les efforts.

Selon un second mode de réalisation préféré de la présente invention, lesdits seconds moyens de fixation forment un système de fixation hyperstatique de l'ensemble moteur sur la structure de l'aéronef. Dans cet autre cas de figure, lesdits seconds moyens de fixation sont de préférence constitués par une pluralité d'attaches souples intégrant chacune un élément d'amortissement en caoutchouc ou élastomère.

De préférence, chaque première nervure de ladite extension latérale de fuselage est réalisée d'une seule pièce avec un cadre de fuselage, même si ces premières nervures pourraient alternativement être rapportées sur les cadres de fuselage, sans sortir du cadre de l'invention.

De préférence, le caisson central longitudinal porte au moins en partie lesdits premiers moyens de fixation. Par ailleurs, ledit caisson de raccord, portant au moins en partie lesdits seconds moyens de fixation, dispose d'une longueur inférieure à celle du caisson central longitudinal selon la direction longitudinale du turbomoteur.

De manière connue, l'ensemble moteur disposé latéralement par rapport au fuselage, derrière la voilure principale, n'est pas nécessairement agencé de sorte que ladite direction d'écartement soit parallèle ou confondue avec un plan horizontal médian de l'aéronef, un angle pouvant en effet être prévu entre ce plan horizontal médian de l'aéronef et ladite direction d'écartement.

Un autre objet de l'invention concerne un aéronef comprenant une partie arrière telle que présentée ci-dessus.

Enfin, l'invention a également pour objet un procédé de montage d'une partie arrière d'aéronef telle que décrite ci-dessus, comprenant le hissage de l'ensemble moteur, réalisé de manière à venir plaquer l'une des deux entités parmi ladite extension latérale de fuselage et ledit caisson de raccord contre l'autre entité, en dessous de celle-ci, puis venir monter lesdits seconds moyens de fixation entre ces deux entités.

Comme mentionné ci-dessus, l'étape de hissage s'effectue préférentiellement avec un outillage de hissage monté sur l'extension latérale de fuselage, afin de déplacer verticalement l'ensemble moteur jusqu'à ce qu'il soit plaqué contre cette même extension.

D'autres avantages et caractéristiques de l'invention apparaîtront dans la description détaillée non limitative ci-dessous.

Cette description sera faite au regard des dessins annexés parmi lesquels ;
- la figure 1 représente une vue schématique en perspective d'une partie arrière d'aéronef, selon un premier mode de réalisation préféré de la présente invention ;
- la figure 2 représente une vue partielle schématique en coupe transversale de la partie arrière d'aéronef montrée sur la figure 1 ;
- la figure 3 représente une vue partielle en perspective de la structure rigide du mât d'accrochage appartenant à l'ensemble moteur montré sur les figures 1 et 2 ;
- la figure 4 représente une vue similaire à celle de la figure 3, sur laquelle l'extension latérale de fuselage a été représentée montée sur la structure rigide du mât d'accrochage ;
- la figure 5 représente une vue similaire à celle de la figure 4, avec la partie arrière se présentant sous la forme d'un second mode de réalisation préféré de la présente invention ;
- la figure 6 représente une vue de face de l'une des attaches souples appartenant aux seconds moyens de fixation schématisés sur la figure 5 ; et
- la figure 7 représente une vue en perspective d'une réalisation possible pour la nervure du mât d'accrochage montrée sur la figure 6.

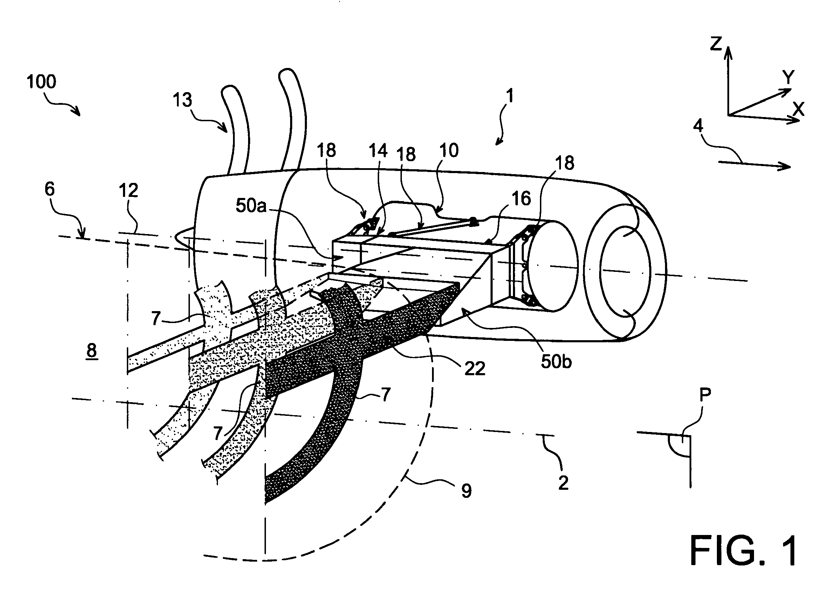

En référence à la figure 1, on voit une partie arrière 100 d'aéronef intégrant un ensemble moteur 1, cette partie arrière 100 se présentant sous la forme d'un premier mode de réalisation préféré de la présente invention.

Dans toute la description qui va suivre, par convention, on appelle X la direction longitudinale de l'aéronef, qui est parallèle à un axe longitudinal 2 de cet aéronef. D'autre part, on appelle Y la direction orientée transversalement par rapport à l'aéronef, et Z la direction verticale ou de la hauteur, ces trois directions X, Y et Z étant orthogonales entre-elles.

Les termes « avant » et « arrière » sont à considérer par rapport à une direction d'avancement de l'aéronef rencontrée suite à la poussée exercée par les moteurs, cette direction étant représentée schématiquement par la flèche 4.

Globalement, la partie arrière 100 comprend un fuselage 6, dont seulement une portion de la partie gauche a été représentée schématiquement, avec une pluralité de cadres de fuselage 7 espacés les uns des autres selon la direction X, et portant une peau extérieure de fuselage 9 formant surface aérodynamique épousée par l'air extérieur. La section transversale de ce fuselage est sensiblement circulaire, elliptique ou similaire, de centre passant par l'axe longitudinal 2, et délimitant un espace intérieur de l'aéronef 8.

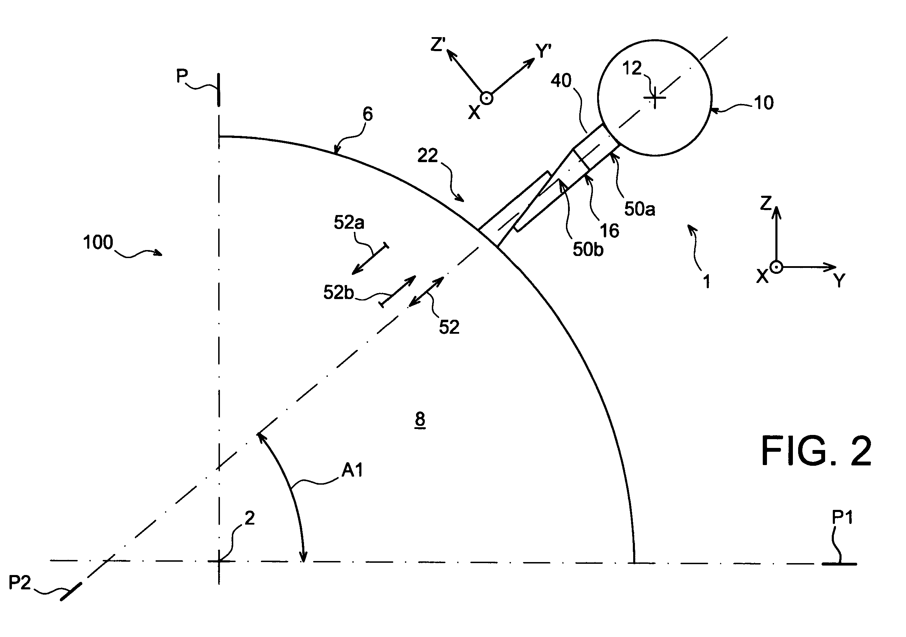

De plus, il comprend deux ensembles moteurs 1 (un seul étant représenté) disposés de part et d'autre d'un plan médian vertical P passant par l'axe 2. Dans le mode de réalisation préféré, chaque ensemble 1 comprend un turbomoteur 10, indifféremment du type turboréacteur, turbopropulseur, ou autre, ici représenté avec le récepteur 13 en partie arrière. Chacun d'eux présente un axe longitudinal 12 sensiblement parallèle à la direction X. De plus, l'ensemble moteur 1 est disposé latéralement par rapport au fuselage 6, étant à cet égard précisé qu'un angle peut être prévu entre le plan horizontal médian de l'aéronef et le plan passant par les axes longitudinaux 2, 12 du turbomoteur et de l'aéronef, comme cela sera détaillé ultérieurement en référence à la figure 2. Typiquement cet angle peut être compris entre 10 et 35°. Quoiqu'il en soit, l'ensemble moteur 1 est considéré être rapporté latéralement sur l'aéronef, et plus précisément sur une partie arrière de celui-ci, à savoir sur une extension latérale 22 de ce dernier, de préférence en forme de caisson, derrière la voilure principale.

Pour assurer la suspension du turbomoteur 10, il est prévu un mât d'accrochage 14, comportant une structure rigide 16 également dite structure primaire à travers laquelle sont repris les efforts, la structure rigide 16 étant classiquement habillée par des carénages aérodynamiques (non représentés) également dénommés structures secondaires.

Le mât 14 présente des premiers moyens de fixation interposés entre le turbomoteur 10 et la structure rigide 16, ces premiers moyens, de conception classique connue de l'homme du métier, étant référencés 18 sur la figure 1. Par ailleurs, le mât 14 présente des seconds moyens de fixation (non représentés) interposés entre le turbomoteur 10 et la structure de l'aéronef, et plus particulièrement interposés, de préférence en intégralité, entre la structure rigide 16 et l'extension latérale de fuselage 22, comme cela sera détaillé ci-après.

Sur la figure 2, on peut apercevoir que la structure rigide 16 comprend au moins un caisson 50a, 50b déporté radialement vis-à-vis de l'axe 12 du moteur, selon une direction d'écartement référencée 52, correspondant également à la direction d'écartement entre le fuselage de l'aéronef et ce même turbomoteur 10, ou encore à la direction de la largeur dudit caisson 50a, 50b.

A titre indicatif, la direction d'écartement 52 n'est pas nécessairement parallèle ou confondue avec un plan horizontal médian P1 de l'aéronef, un angle A1 pouvant en effet être prévu entre ce plan horizontal médian P1 et la direction d'écartement 52, comme visible sur la figure 2. En coupe transversale telle que celle montrée sur cette figure, le plan incliné P2, intégrant la direction d'écartement 52 et formant l'angle A1, peut être distinct du plan précité passant par les axes longitudinaux 2, 12 du turbomoteur et de l'aéronef, la valeur de l'angle A1 restant néanmoins de préférence comprise entre 10 et 35°, et encore plus préférentiellement de l'ordre de 24°.

A cet égard, un nouveau repère, attaché à l'ensemble moteur 1 et défini par les directions X, Y' et Z', sera employé pour la suite de la description. La direction X correspond toujours à la direction longitudinale de l'aéronef et du turbomoteur, tandis que la direction Y', agencée dans un plan YZ, correspond à la direction d'écartement 52. Enfin, la direction Z', également agencée dans un plan YZ, est orthogonale aux deux directions X et Y', et donc orthogonale au plan P2 précité, ce dernier étant assimilable à un plan médian de la structure rigide 16, selon son épaisseur.

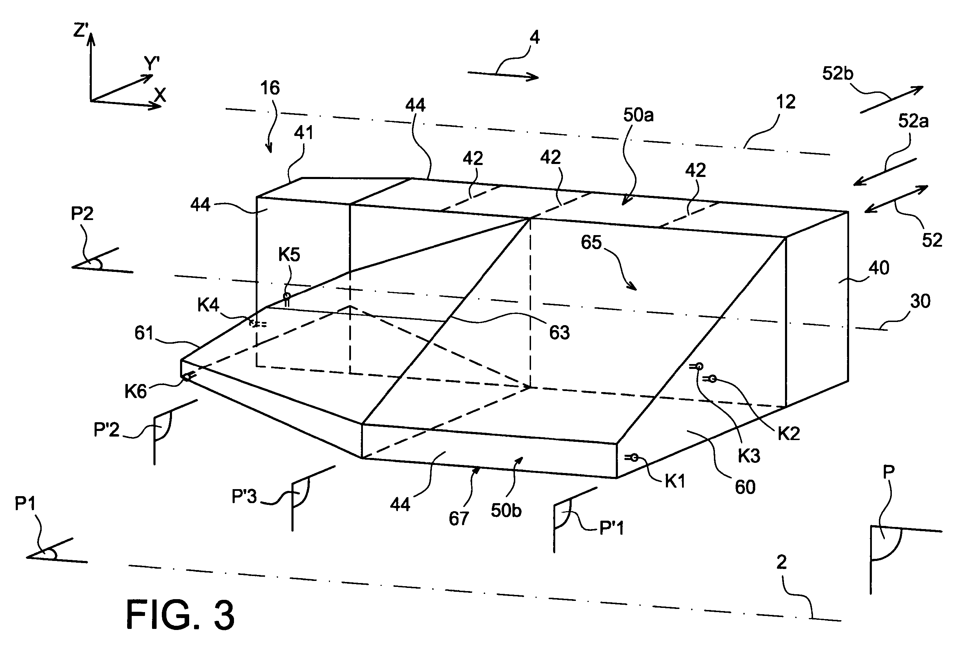

Sur la figure 3, on peut apercevoir la structure rigide 16, comprenant donc un caisson central longitudinal 50a s'étendant selon une direction principale 30 du mât, assimilable à sa direction longitudinale et parallèle à la direction X. Le caisson 50a peut présenter une nervure de fermeture avant 40 et une nervure de fermeture arrière 41, ainsi qu'éventuellement des panneaux latéraux de fermeture 44 et des nervures intérieures de renfort 42. Une peau supérieure et une peau inférieure sont également prévues, sensiblement dans des plans XY'. Le caisson 50a est destiné à porter, de préférence en intégralité, les premiers moyens de fixation raccordant la structure rigide du mât au turbomoteur.

La structure rigide 16 comprend un caisson de raccord 50b porté par le caisson central longitudinal 50a et faisant saillie de celui-ci dans un premier sens 52a de la direction d'écartement 52, allant du turbomoteur vers la structure rigide 16. Bien évidemment, ce premier sens 52a est opposé à un second sens 52b de cette direction 52. Ici aussi, le caisson 50b s'étend selon la direction principale 30 du mât, assimilable à sa direction longitudinale, et présente une pluralité de nervures, dites secondes nervures, parmi lesquelles une nervure de fermeture avant 60 et une nervure de fermeture arrière 61, ainsi de préférence qu'une nervure intérieure de renfort 63. Ces trois secondes nervures 60, 61, 63 sont espacées les unes des autres selon la direction X, et chacune agencée dans un plan Y'Z'. Comme cela a été schématisé sur la figure 3, les premières nervures 60, 61, 63 sont respectivement agencées dans des plans référencés P'1, P'2, P'3.

En outre, le caisson 50b comprend des panneaux latéraux de fermeture 44. Un même panneau 44 peut assurer simultanément la fermeture des deux caissons 50a, 50b. Egalement, une peau supérieure 65 et une peau inférieure 67 sont prévues, sensiblement dans des plans XY', ou bien dans des plans légèrement inclinés par rapport à ces derniers, selon la direction X. Les peaux peuvent être réalisées, pour une partie d'elles au moins, d'un seul tenant avec les peaux du caisson 50a. Un rétrécissement de l'épaisseur du caisson de raccord 50b est néanmoins de préférence réalisé vers l'arrière et vers l'axe 2 de l'aéronef, comme visible sur la figure 3.

En revanche, le caisson de raccord 50b présente une longueur, selon la direction X, inférieure à la longueur du caisson central 50a, ce dernier s'approchant en effet plus près du récepteur (non représenté) du turbomoteur. Les deux nervures de fermeture avant 40 et 60 sont de préférence réalisées d'une seule pièce agencée dans un plan Y'Z', seules les nervures de fermeture arrière des caissons 50a, 50b étant donc espacées l'une de l'autre selon la direction 30.

Dans ce premier mode de réalisation préféré, les seconds moyens de fixation sont rapportés en intégralité sur le caisson de raccord 50b. Pour ce faire, il est prévu six points de montage, chacun destiné à faire partie intégrante de l'une des six attaches composant les seconds moyens de fixation formant système de montage isostatique. Sur la figure 3, on peut donc voir les trois premiers points d'attache K1, K2, K3 rapportés fixement sur la nervure de fermeture avant 60, en saillie vers l'avant, et les trois autres points d'attache, K4 rapporté fixement sur la nervure de fermeture arrière 61, en saillie vers l'arrière, K5 rapporté fixement sur la peau supérieure du caisson 50b, en saillie vers le haut dans la direction Z', et enfin K6 rapporté fixement sur le panneau latéral 44 en regard du fuselage, en saillie vers ce dernier dans la direction Y'. Il est néanmoins précisé que les points K5 et K6 sont agencés à forte proximité de la nervure arrière 61, ce qui permet de localiser les six attaches en deux zones distinctes éloignées l'une de l'autre, centrées respectivement sur les nervures de fermeture avant 60 et arrière 61 du caisson 50b.

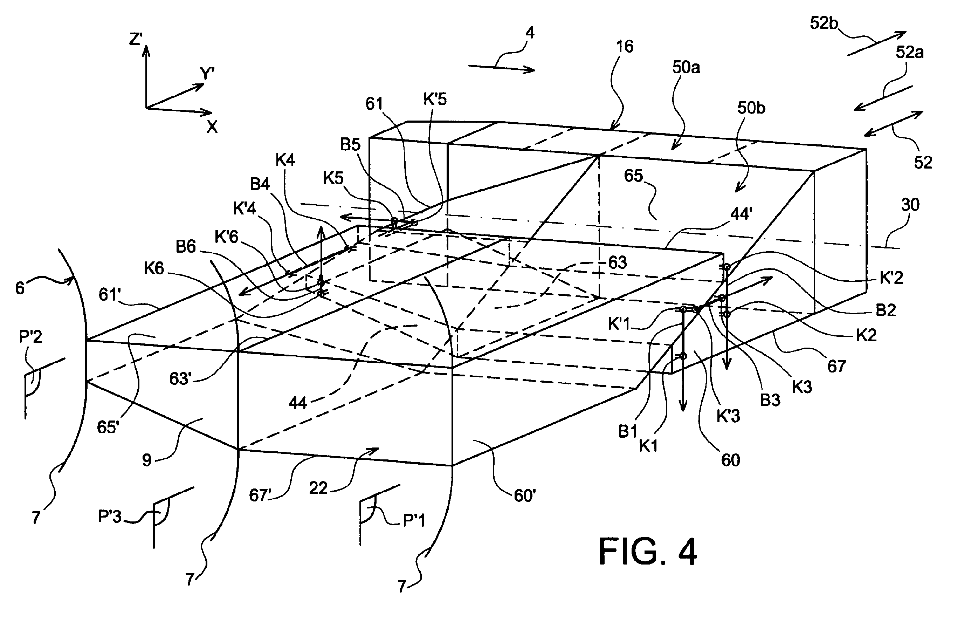

Sur la figure 4, on peut voir l'extension latérale de fuselage 22, en forme de caisson, montée sur le caisson de raccord 50b, plaquée en-dessous de cette extension. Elle s'étend dans le second sens 52b de la direction d'écartement 52, à partir de la peau extérieur de fuselage 9.

Ici aussi, l'extension 22 s'étend parallèlement à la direction principale 30 du mât, et présente une pluralité de nervures, dites premières nervures, parmi lesquelles une nervure de fermeture avant 60' agencée au-dessus de la nervure 60, dans la continuité de celle-ci, à savoir dans le plan P'1. De même, elle comprend une nervure de fermeture arrière 61', agencée au-dessus de la nervure 61, dans la continuité de celle-ci, à savoir dans le plan P'2. Enfin, elle comporte une nervure intérieure de renfort 63' agencée au-dessus de la nervure 63, dans la continuité de celle-ci, à savoir dans le plan P'3. Ces trois premières nervures 60', 61', 63' sont donc également espacées les unes des autres selon la direction X, et chacune agencée dans un plan Y'Z'.

En outre, l'extension 22 comprend des panneaux latéraux de fermeture 44', l'un en regard et préférentiellement à distance du caisson 50a de la structure rigide, et l'autre préférentiellement constitué par la peau extérieure 9 de fuselage, même si cette dernière ne revêt bien entendu aucun caractère nécessaire.

Egalement, une peau supérieure 65' et une peau inférieure 67' sont prévues, sensiblement dans des plans XY', ou bien dans des plans légèrement inclinés par rapport à ces derniers, selon la direction X. De préférence, il est prévu que la peau supérieure 65 du caisson 50b soit en contact surfacique, par exemple plan ou multi-plan, avec la peau inférieure 67' de l'extension 22 contre laquelle elle est plaquée.

Il est noté que le procédé de montage peut être mis en oeuvre en prévoyant un outillage de hissage (non représenté) monté directement sur l'extension de fuselage, et assurant un déplacement uniquement vertical de l'ensemble moteur situé en dessous, jusqu'à ce que ce dernier voit la peau supérieure 65 de son caisson 50b se plaquer contre la peau inférieure 67' de l'extension 22.

Un rétrécissement de l'épaisseur de l'extension 22 peut être pratiqué vers l'arrière et vers l'axe du turbomoteur, comme visible sur la figure 4. Ainsi, ce sont les deux parties effilées des entités 22, 50b, correspondant respectivement à leurs extrémités libres dans la direction d'écartement, qui sont plaquées et en contact, pour un encombrement minimum au niveau de leur zone de superposition.

L'extension 22 présente une longueur, selon la direction X, sensiblement identique à celle du caisson de raccord 50b. D'ailleurs, ces deux entités superposées selon la direction Z' présentent globalement une forme générale sensiblement identique, rendant la conception parfaitement homogène.

Dans ce premier mode de réalisation préféré, les seconds moyens de fixation sont rapportés en intégralité sur l'extension 22. Pour ce faire, il est prévu six points de montage, chacun destiné à faire partie intégrante de l'une des six attaches composant les seconds moyens de fixation formant système de montage isostatique, et coopérant avec les points K1 à K6 agencés sur le caisson 50b. Sur la figure 4, on peut donc voir les trois premiers points d'attache K'1, K'2, K'3 rapportés fixement sur la nervure de fermeture avant 60', en saillie vers l'avant, et les trois autres points d'attache, K'4 rapporté fixement sur la nervure de fermeture arrière 61', en saillie vers l'arrière, K'5 rapporté fixement sur le panneau latéral 44' en regard du caisson 50a, en saillie vers ce dernier dans la direction Y', et enfin K'6 rapporté fixement sur la peau inférieure 67', en saillie vers le bas dans la direction Z'. Ici encore, il est précisé que les points K'5 et K'6 sont agencés à forte proximité de la nervure arrière 61', ce qui permet de localiser les six attaches en deux zones distinctes éloignées l'une de l'autre, centrées respectivement sur les nervures de fermeture avant 60' et arrière 61' du caisson 50b.

Les points de montage précités de l'extension 22 et du caisson 50b sont reliés deux à deux par des bielles de reprise, afin de former les attaches formant le système de fixation isostatique. Ainsi, la première attache intègre une bielle B1 orientée selon la direction Z' et montée sur les points K1, K'1, la seconde attache intègre une bielle B2 orientée selon la direction Z' et montée sur les points K2, K'2, la troisième attache intègre une bielle B3 orientée selon la direction Y' et montée sur les points K3, K'3, la quatrième attache intègre une bielle B4 orientée selon la direction Y' et montée sur les points K4, K'4, la cinquième attache intègre une bielle B5 orientée selon la direction X et montée sur les points K5, K'5, et la sixième attache intègre une bielle B6 orientée selon la direction Z' et montée sur les points K6, K'6.

Avec cette configuration, les efforts s'exerçant selon la direction X sont repris par la cinquième attache, ceux s'exerçant selon la direction Y' sont repris par les seconde et quatrième attaches, et ceux s'exerçant selon la direction Z' sont repris par les première troisième et sixième attaches. En outre, la reprise du moment s'exerçant selon la direction Y' est assurée conjointement par les première, troisième et sixième attaches, la reprise du moment s'exerçant selon la direction Z' est assurée conjointement par les seconde et quatrième attaches, et la reprise du moment s'exerçant selon la direction X est assurée conjointement par les première et troisième attaches.

Si les nervures de fermeture avant et arrière 60, 60', 61, 61', et leur proximité, permettent de loger les six attaches précitées, les deux nervures intérieures 63, 63' peuvent quant à elles être le siège d'attaches en attente (non représentées), dites de secours ou encore « Fail Safe », à savoir destinées à participer à la reprise des efforts uniquement en cas de défaillance de l'une ou plusieurs des six attaches principales.

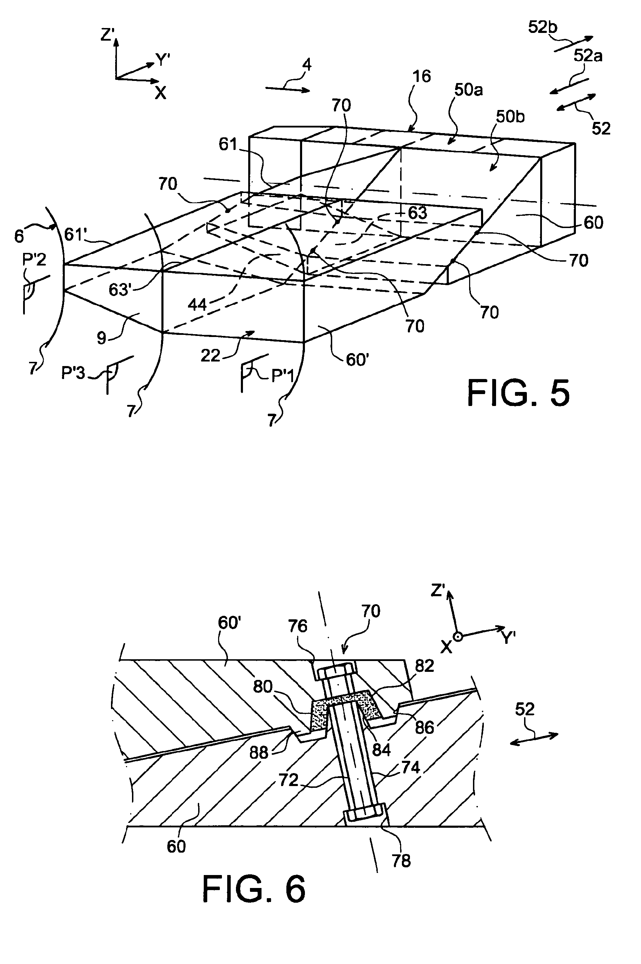

Sur la figure 5, il a été représenté un second mode de réalisation préféré de la présente invention. Au lieu d'un système isostatique, les seconds moyens de fixation forment un système de fixation hyperstatique entre la structure rigide 16 et l'extension de fuselage 22, ces deux entités conservant par ailleurs une conception identique ou similaire à celle décrite ci-dessus.

Pour assurer l'assemblage hyperstatique, il est par exemple prévu cinq ou six attaches souples 70, également dénommées « Soft Mounts », de préférence agencées entre les premières et secondes nervures. Dans la configuration exemplifiée, deux attaches 70 sont prévues dans le plan P'1 à l'interface entre les deux nervures de fermeture avant 60, 60', deux attaches 70 sont prévues dans le plan P'3 à l'interface entre les deux nervures intérieures 63, 63', et une attache 70 est prévue dans le plan P'2 à l'interface entre les deux nervures de fermeture arrière 61, 61'.

Si la figure 5 ne représente que schématiquement ces attache souples 70, une conception préférée est détaillée sur la figure 6. L'attache comprend un système du type tirant à deux axes concentriques 72, 74, l'un présentant une tête en appui dans un logement 76 pratiqué sur la partie supérieure de la nervure 60', et l'autre disposant d'une tête en appui dans un logement 78 pratiqué sur la partie inférieure de la nervure 60. Ainsi, le tirant traverse les deux nervures afin d'assurer le plaquage de l'une contre l'autre, selon la direction Z' correspondant également de préférence à la direction du tirant. Pour des facilités d'implantation, le tirant peut être tendu à l'aide d'un vérin hydraulique.

A l'interface entre les deux nervures, la première nervure 60' présente un logement 80 recevant une bague conique d'amortissement 82 en caoutchouc ou élastomère, en étant en contact avec la surface extérieure de cette bague. Sur la seconde nervure 60, il est prévu un pion conique 84 épousant la surface intérieure de la bague 82, assurant une compression de celle-ci entre les éléments 80, 84, pour un meilleur amortissement des vibrations. En outre, une rainure 86 peut être pratiquée dans la seconde nervure 60, autour du pion 84, afin de constituer un organe de centrage dans lequel vient s'insérer une contre-forme 88 appartenant à la nervure 60', et de préférence agencée dans le prolongement du logement 80. Il est noté que pour assurer un tel assemblage, les peaux de caisson peuvent être détourées localement afin de permettre le passage du tirant et la mise en place de la bague d'amortissement 82.

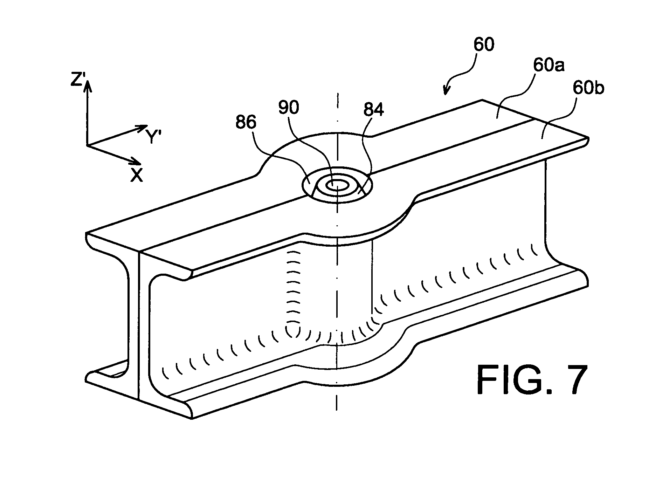

Enfin, la figure 7 montre une réalisation possible pour la seconde nervure de fermeture avant 60, applicable à l'ensemble des secondes nervures du caisson de raccord. Dans cette réalisation, la nervure 60 est réalisée à partir de deux éléments superposés 60a, 60b superposés selon la direction X, et formant conjointement l'orifice 90 destiné à être traversé par le système de tirant décrit ci-dessus. Chacun des deux éléments 60a, 60b forme donc une moitié de l'orifice 90, ainsi qu'une moitié du pion 84 et une moitié de la rainure de centrage 86, l'axe du tirant et de l'orifice 90 étant agencé dans le plan d'interface des deux éléments 60a, 60b. Cela permet d'assurer une fonction de secours / sécurité, également dite « Fail Safe », puisqu'en cas de rupture de l'un des deux éléments constitutifs 60a, 60b de la nervure 60, l'autre peut continuer à assurer la transmission d'efforts.

Une conception identique ou similaire peut bien entendu être adoptée pour les premières nervures 60', 61', 63' de l'extension de fuselage 22.

Bien entendu, diverses modifications peuvent être apportées par l'homme du métier à l'invention qui vient d'être décrite, uniquement à titre d'exemples non limitatifs. Par exemple, l'extension latérale de fuselage 22 pourrait alternativement être plaquée sous le caisson de raccord 50b, sans sortir du cadre de l'invention.

## Revendications

1. Partie arrière (100) d'aéronef comprenant au moins un ensemble moteur (1) intégrant un turbomoteur (10) ainsi qu'un mât d'accrochage (14) du turbomoteur, ledit ensemble moteur étant rapporté latéralement sur la structure de l'aéronef, ledit mât comprenant une structure rigide (16) déportée radialement vis-à-vis d'un axe longitudinal (12) du turbomoteur selon une direction d'écartement (52), le mât comportant également des premiers moyens de fixation (18) assurant l'assemblage du turbomoteur sur la structure rigide ainsi que des seconds moyens de fixation (20) fixés d'une part sur ladite structure rigide (16) et d'autre part sur la structure de l'aéronef,
**caractérisée**
**en ce que** la structure rigide (16) comprend un caisson central longitudinal (50a) ainsi qu'un caisson de raccord (50b) porté par ledit caisson central longitudinal et faisant saillie de celui-ci dans un premier sens (52a) de la direction d'écartement allant du turbomoteur vers la structure rigide,
**en ce que** ladite structure de l'aéronef comprend une extension latérale (22) du fuselage faisant saillie de celui-ci dans un second sens (52b) de la direction d'écartement, opposé audit premier sens (50a), et
**en ce que** l'une des deux entités parmi ladite extension latérale de fuselage (22) et ledit caisson de raccord (50b) est plaquée contre l'autre entité, en dessous de celle-ci, lesdits seconds moyens de fixation (20) étant agencés entre ces deux entités.

2. Partie arrière selon la revendication 1, **caractérisée en ce que** ladite extension latérale de fuselage (22) comprend une pluralité de premières nervures (60', 61', 63'), **en ce que** ledit caisson de raccord (50b) comprend une pluralité de secondes nervures (60, 61, 63), et **en ce qu'**au moins l'une desdites premières nervures est agencée dans la continuité de l'une desdites secondes nervures, sensiblement dans un même plan.

3. Partie arrière selon la revendication 2, **caractérisée en ce qu'**au moins une partie des seconds moyens de fixation (20) est fixée sur lesdites premières et secondes nervures.

4. Partie arrière selon l'une quelconque des revendications précédentes, caractérisée en ce lesdits seconds moyens de fixation (20) forment un système de fixation isostatique de l'ensemble moteur (1) sur la structure de l'aéronef.

5. Partie arrière selon la revendication 4, **caractérisée en ce que** lesdits seconds moyens de fixation (20) sont constitués par une pluralité d'attaches intégrant chacune une bielle de reprise d'efforts.

6. Partie arrière selon l'une quelconque des revendications 1 à 3, caractérisée en ce lesdits seconds moyens de fixation (20) forment un système de fixation hyperstatique de l'ensemble moteur (1) sur la structure de l'aéronef.

7. Partie arrière selon la revendication 6, **caractérisée en ce que** lesdits seconds moyens de fixation (20) sont constitués par une pluralité d'attaches souples (70) intégrant chacune un élément d'amortissement (82) en caoutchouc ou élastomère.

8. Partie arrière selon l'une quelconque des revendications précédentes combinée à la revendication 2, **caractérisée en ce que** chaque première nervure (60', 61', 63') de ladite extension latérale de fuselage (22) est réalisée d'une seule pièce avec un cadre de fuselage (7).

9. Aéronef comprenant une partie arrière (100) selon l'une quelconque des revendications précédentes.

10. Procédé de montage d'une partie arrière (100) d'aéronef selon l'une quelconque des revendications 1 à 8, **caractérisé en ce qu'**il comprend le hissage de l'ensemble moteur (1), réalisé de manière à venir plaquer l'une des deux entités parmi ladite extension latérale de fuselage (22) et ledit caisson de raccord (50b) contre l'autre entité, en dessous de celle-ci, puis venir monter lesdits seconds moyens de fixation (20) entre ces deux entités.

## Claims

1. Aft part (100) of an aircraft comprising at least one engine assembly (1) including a turbine engine (10) and a turbine engine mounting pylon (14) said engine assembly being added onto the side of the aircraft structure, said pylon comprising a rigid structure (16) offset radially from a longitudinal axis (12) of the turbine engine along one direction of separation (52), the pylon also comprising first attachment means (18) for assembly of the turbine engine on the rigid structure and second attachment means (20) fixed firstly to said rigid assembly (16) and secondly to the aircraft structure,
**characterised**
**in that** the rigid structure (16) comprises a longitudinal central box (50a) and a connection box (50b) carried by said central longitudinal box and projecting from it along a first direction (52a) of the line of separation from the turbine engine towards the rigid structure,
**in that** said aircraft structure comprises a fuselage lateral extension (22) projecting from the fuselage in a second direction (52b) along the line of separation, opposite said first direction (50a), and
**in that** one of the two entities among said lateral extension of the fuselage (22) and said connection box (50b) is pressed into contact with the other entity, below it, said second attachment means (20) being arranged between these two entities.

2. Aft part according to claim 1, **characterised in that** said fuselage lateral extension (22) comprises a plurality of first ribs (60', 61', 63'), and **in that** said connection box (50b) comprises a plurality of second ribs (60, 61, 63), and **in that** at least one of said first ribs is laid out in the continuity of one of said second ribs, approximately in the same plane.

3. Aft part according to claim 2, **characterised in that** at least part of second attachment means (20) is fixed on said first and second ribs.

4. Aft part according to any one of the previous claims, **characterised in that** said second attachment means (20) form a statically determinate attachment system of the engine assembly (1) onto the aircraft structure.

5. Aft part according to claim 4, **characterised in that** said second attachment means 20) are composed of a plurality of mounts each including a rod resisting forces.

6. Aft part according to any one of claims 1 to 3, **characterised in that** said second attachment means (20) form a statically indeterminate system for attachment of the engine assembly (1) onto the aircraft structure.

7. Aft part according to claim 6, **characterised in that** said second attachment means (20) are composed of a plurality of soft mounts (70) each including a shock absorbing element (82) made of rubber or elastomer.

8. Aft part according to one of the previous claims combined with claim 2, **characterised in that** each first rib (60', 61', 63') of said fuselage lateral extension (22) is made in a single piece with a fuselage frame (7).

9. Aircraft comprising an aft part (100) according to any one of the previous claims.

10. Method of assembly an aft part (100) of an aircraft according to any one of claims 1 to 8, **characterised in that** it comprises lifting of the engine assembly (1), done so as to press one of the two entities into contact among said fuselage lateral extension (22) and said connection box (50b) into contact with the other entity and below it, and then mounting said second attachments means (20) between these two entities.

## Patentansprüche

1. Hinterer Teil (100) eines Luftfahrzeugs, der mindestens ein Motoraggregat (1) aufweist, das einen Turbomotor (10) integriert, sowie einen Anhängmast (14) des Turbomotors, wobei das Motoraggregat seitlich an die Struktur des Luftfahrzeugs angebaut ist, wobei der Mast eine starre Struktur (16), die radial gegenüber einer Längsachse (12) des Turbomotors entlang einer Beabstandungsrichtung (52) versetzt ist, aufwefst, wobei der Mast auch erste Befestigungsmittel (18) aufweist, die das Zusammenfügen des Turbomotors auf der starren Struktur sicherstellen, sowie zweite Befestigungsmittel (20), die einerseits auf der starren Struktur (16) und andererseits auf der Struktur des Luftfahrzeugs befestigt sind,
**dadurch gekennzeichnet,**
**dass** die starre Struktur (16) einen zentralen Längskasten (50a) sowie einen Anschlusskasten (50b), der von dem zentralen Längskasten getragen wird und von diesem in eine erste Richtung (52a) der Abstandsrichtung, die von dem Turbomotor zu der starren Struktur reicht, vorsteht, aufweist,
**dass** die starre Struktur des Luftfahrzeugs eine seitliche Rumpferweiterung (22) aufweist, die von diesem in eine zweite Richtung (52b) der Abstandsrichtung, der ersten Richtung (50a) entgegengesetzt vorsteht, und
**dass** eine der zwei Einheiten, seitliche Rumpferweiterung (22) und Anschlusskasten (50b), gegen die andere Einheit angelegt ist, unterhalb dieser, wobei die zweiten Befestigungsmittel (20) zwischen diesen zwei Einheiten eingerichtet sind.

2. Hinterer Teil nach Anspruch 1, **dadurch gekennzeichnet, dass** die seitliche Rumpferweiterung (22) eine Vielzahl erster Rippen (60', 61', 63') aufweist, und dass der Anschlusskasten (50b) eine Vielzahl zweiter Rippen (60, 61, 63) aufweist, und dass mindestens eine der ersten Rippen in der Fortsetzung einer der zweiten Rippen, im Wesentlichen in einer gleichen Ebene eingerichtet ist.

3. Hinterer Teil nach Anspruch 2, **dadurch gekennzeichnet, dass** mindestens ein Teil der zweiten Befestigungsmittet (20) auf den ersten und zweiten Rippen befestigt ist.

4. Hinterer Teil nach einem der vorhergehenden Ansprüche, **dadurch gekennzeichnet, dass** die zweiten Befestigungsmittel (20) ein isostatisches Befestigungssystem des Motoraggregats (1) auf der Struktur des Luftfahrzeugs bilden,

5. Hinterer Teil nach Anspruch 4, **dadurch gekennzeichnet, dass** die zweiten Befestigungsmittel (20) aus einer Vielzahl von Befestigungen bestehen, die jeweils eine Kräfteübemahmeschubstange integrieren.

6. Hinterer Teil nach einem der Ansprüche 1 bus 3, **dadurch gekennzeichnet, dass** die zweiten Befestigungsmittel (20) ein hyperstatisches Befestigungssystem des Motoraggregats (1) auf der Struktur des Luftfahrzeugs bilden.

7. Hinterer Teil nach Anspruch 6, **dadurch gekennzeichnet, dass** die zweiten Befestigungsmittel (20) aus einer Vielzahl biegsamer Befestigungen (70) bestehen, die jeweils ein Dämpfelement (82) aus Kautschuk oder Elastomer integrieren.

8. Hinterer Teil nach einem der vorhergehenden Ansprüche, kombiniert mit dem Anspruch 2. **dadurch gekennzeichnet, dass** jede erste Rippe (60', 61', 63') der seitlichen Rumpferweiterung (22) aus einem einzigen Teil mit einem Rumpfrahmen (7) hergestellt ist.

9. Luftfahrzeug, das einen hinteren Teil (100) nach einem der vorhergehenden Ansprüche aufweist.

10. Montageverfahren eines hinteren Teils (100) eines Luftfahrzeugs nach einem der Ansprüche 1 bis 8, **dadurch gekennzeichnet, dass** es das Hochheben der Motoreinheit (1) aufweist, das derart ausgeführt wird, dass eine der zwei Einheiten, seitliche Rumpferweiterung (22) und Anschlusskasten (50b), gegen die andere angelegt wird, unterhalb dieser, um dann die Montage der zweiten Befestigungsmittel (20) zwischen diesen zwei Einheiten auszuführen.
